# EUROPEAN PATENT APPLICATION

(11) **EP 1 727 036 A2**
(43) Date of publication of application: **29.11.2006**
(21) Application number: 06114314.5
(22) Date of filing: 22.05.2006
(51) Int. Cl.: G06F 3/12

(54) **Multi image forming method and system using job retention functions**

(30) Priority: 24.05.2005 KR 20050043766
(71) Applicant: Samsung Electronics Co., Ltd, Suwon-si, Gyeonggi-do 442-742 (KR)
(72) Inventor: Han, Chung-a, Gyeonggi-do (KR)
(74) Representative: Read, Matthew Charles

(57) **Abstract**

A multi image forming system uses job retention functions. A host (100) collects and displays job retention information from a plurality of image forming apparatuses (300,320,340,360) connected to the network, stores job retention functions for selected image forming apparatuses using the displayed job retention information, generates print job data according to the stored job retention functions and transfers the generated print job data to the selected image forming apparatuses. A plurality of image forming apparatuses connected to a network can simultaneously form images using the job retention functions, thereby reducing repetitive image forming operations.

## Description

The present invention relates to multi image forming using a plurality of image forming apparatuses, and more particularly, to a multi image forming method and system using different job retention functions.

A plurality of image forming apparatuses can be connected to a network to receive a printing document from a host connected to the network and form images of the printing document.

Job retention functions can be used to form the images by temporarily storing the printing document in the image forming apparatuses. A storage medium (HDD) to store data is provided in the image forming apparatuses to form the images using the job retention functions.

However, since a type of job retention function must be selected from among the job retention functions to form the images, it is impossible to form multiple images at one time. A printing job is repeatedly performed by the number of the plurality of image forming apparatuses in response to transfer of the printing document to the plurality of image forming apparatuses using different job retention functions. There is a disadvantage that each of the plurality of image forming apparatuses must form the images using a different job retention function so that the plurality of image forming apparatuses can form the images one at a time.

The present invention provides a multi image forming method using job retention functions by which a plurality of image forming apparatuses connected to a network form multiple images using different job retention functions at one time.

The present invention also provides a multi image forming system using job retention functions by which a plurality of image forming apparatuses connected to a network form multiple images using different job retention functions at one time.

Additional aspects and utilities of the present invention will evident from the description which follows.

The foregoing and/or other aspects and utilities of the present invention may be achieved by providing a method of multi image forming using job retention functions, the method including collecting and displaying job retention information from a plurality of image forming apparatuses at a host connected to a network, storing job retention functions of selected image forming apparatuses using the displayed job retention information, generating print job data according to the stored job retention functions, and transferring the generated print job data to the selected image forming apparatuses.

The foregoing and/or other aspects and utilities of the present invention may also be achieved by providing a multi image forming system including a host and a plurality of image forming apparatuses connected to the host through a network using job retention functions, wherein the host includes an information collection unit which collects and displays job retention information from the image forming apparatuses, a storage unit which stores job retention functions of selected image forming apparatuses using the displayed job retention information, a data generation unit which generates print job data according to the stored job retention functions, and a transfer unit which transfers the generated print job data to the selected image forming apparatuses.

The foregoing and/or other aspects and utilities of the present invention may also be achieved by providing a printer driver or an application to perform a method of multi image forming using job retention functions, the method including collecting and displaying job retention information from a plurality of image forming apparatuses connected to a host through a network, storing job retention functions of selected image forming apparatuses using the displayed job retention information, generating print job data according to the stored job retention functions, and transferring the generated print job data to the selected image forming apparatuses.

The foregoing and/or other aspects and utilities of the present invention may also be achieved by providing a computer-readable recording medium containing executable code to perform a method of multi image forming using job retention functions, including collecting and displaying job retention information from a plurality of image forming apparatuses connected to a host through a network, storing job retention functions of selected image forming apparatuses using the displayed job retention information, generating print job data according to the stored job retention functions, and transferring the generated print job data to the selected image forming apparatuses.

The foregoing and/or other aspects and utilities of the present invention may also be achieved by providing a method of controlling a plurality of image forming apparatuses, including requesting each of the plurality of image forming apparatuses to provide a response signal if predetermined job retention functions can be performed, receiving the response signal from each image forming apparatus capable of performing the predetermined job retention functions, requesting each image forming apparatuses providing the response signal to provide job retention information corresponding to the job retention functions, receiving the job retention information from the image forming apparatuses providing the response signal, and providing print job data to the image forming apparatuses to perform print jobs corresponding to the provided job retention information.

The foregoing and/or other aspects and utilities of the present invention may also be achieved by providing a multi image forming apparatus control system, including a network connected to a plurality of image forming apparatuses, and a host connected to the network to control the plurality of image forming apparatuses, the host including a receiving unit to receive predetermined job retention information of the image forming apparatuses capable of performing job retention functions of one or more of the job retention information, a storage unit to store the received job retention information for each of the image forming apparatuses capable of performing the job retention functions, a display unit to display job retention information for each of the image forming apparatuses capable of performing the job retention functions and to select one or more job retention functions for a print job, a data generation unit to generate print job data according to the job retention functions of the job retention information stored in the storage unit, and a transfer unit to transfer the print job data to each selected image forming apparatus.

The foregoing and/or other aspects and utilities of the present invention may also be achieved by providing a host usable with a plurality of image forming apparatuses to determine which image forming apparatuses of a plurality of image forming apparatuses to determine which of the plurality of image forming apparatuses are capable of performing print job functions, to determine job retention information of the capable image forming apparatuses, to select an image forming apparatus to print a print job based on the capability determination, to select the job retention functions for the selected image forming apparatus, to display the capable image forming apparatuses and the job retention information for the capable image forming apparatuses, and to generate print job data for the print job according the selected job retention functions.

These and/or other aspects and utilities of the present invention will become apparent and more readily appreciated from the following description of embodiments thereof, taken in conjunction with the accompanying drawings of which:
Figure 1 is a flowchart illustrating a multi image forming method using job retention functions according to an embodiment of the present invention;
Figure 2 is a flowchart illustrating Operation 10 of Figure 1 according to an embodiment of the present invention;
Figure 3 is a flowchart illustrating Operation 42 of Figure 2 according to an embodiment of the present invention;
Figure 4 is an exemplary diagram illustrating a list of image forming apparatuses displayed by a user interface;
Figure 5A is an exemplary diagram illustrating a job retention information display to be performed by a selected image forming apparatus displayed by the user interface;
Figure 5B is an exemplary diagram illustrating the job retention information display to be performed by another selected image forming apparatus displayed by the user interface;
Figure 6 is a flowchart illustrating an exemplary method of collecting and displaying job retention information between a host and a plurality of image forming apparatuses of Operation 10 according to an embodiment of the present invention; and
Figure 7 is a block diagram illustrating a multi image forming system using job retention functions according to an embodiment of the present invention.

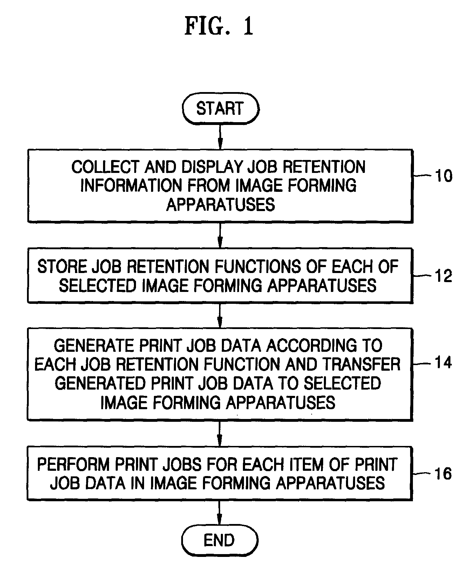

Referring to Figure 1, a host connected to a network collects and displays job retention information from a plurality of image forming apparatuses connected to the network (Operation 10). The job retention information includes job retention functions of the image forming apparatuses. The job retention information also includes list information, job retention function information, and user registration information of the image forming apparatuses. The list information includes the image forming apparatuses that provide the job retention information. The job retention function information includes various types of job retention functions such as normal prints, private prints, proof prints, storage, delay prints, and spool prints. The user registration information includes users who perform image forming operations using the job retention functions.

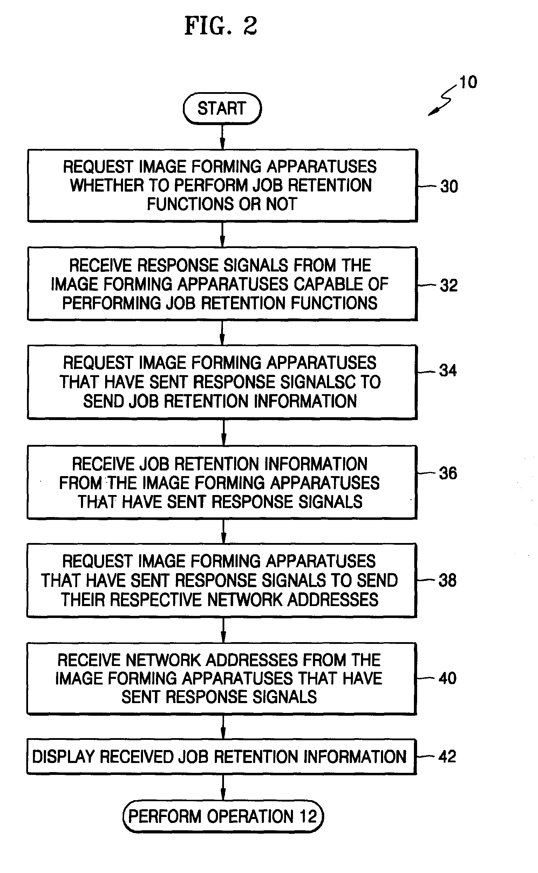

Figure 2 is a flowchart illustrating an embodiment of Operation 10 of the method of multi image forming illustrated in Figure 1. Referring to Figure 2, the host requests each of the image forming apparatuses to decide whether to perform job retention functions (Operation 30).

After the host requests each of the image forming apparatuses to decide whether to perform the job retention functions in Operation 30, the host receives response signals from each of the image forming apparatuses capable of performing job retention functions (Operation 32). The image forming apparatuses which are requested to perform job retention functions by the host each determine whether to perform job retention functions. If the image forming apparatuses decide to perform job retention functions, the image forming apparatuses send the response signals to the host notifying the host of the same.

After the host receives the response signals in Operation 32, the host requests the image forming apparatuses that have sent the response signals to send the job retention information of each of the image forming apparatuses (Operation 34).

After the host requests the image forming apparatuses that sent the response signals to send their job retention information in Operation 34, the host receives the job retention information from each of the image forming apparatuses that have sent the response signals (Operation 36). In other words, the image forming apparatuses that are capable of performing job retention functions send their job retention information to the host.

After the host receives the job retention information in Operation 36, the host requests the image forming apparatuses that have sent the response signals to send their respective network addresses (Operation 38).

Then, the host receives the network address of each of the image forming apparatuses that have sent the response signals (Operation 40).

The host receives an internet protocol address for each of the image forming apparatuses as their network address. The host establishes ports corresponding to the network addresses of the image forming apparatuses.

After the host receives the network address of each of the image forming apparatuses that have sent the response signals in Operation 40, the host displays the job retention information corresponding to each of the image forming apparatuses (Operation 42).

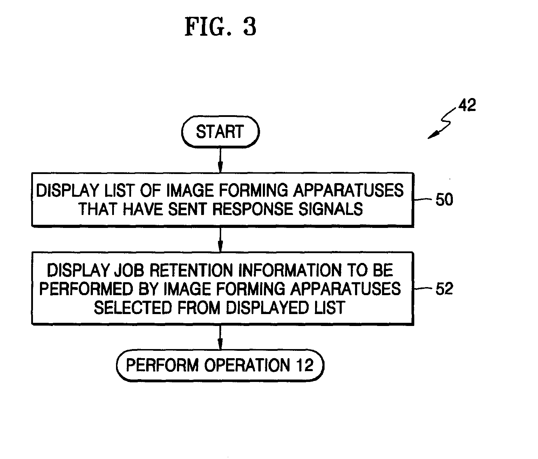

Figure 3 is a flowchart illustrating Operation 42 of the operation of displaying the received job retention information of Figure 2. Referring to Figure 3, the host displays a list of the image forming apparatuses that have sent the response signals (Operation 50).

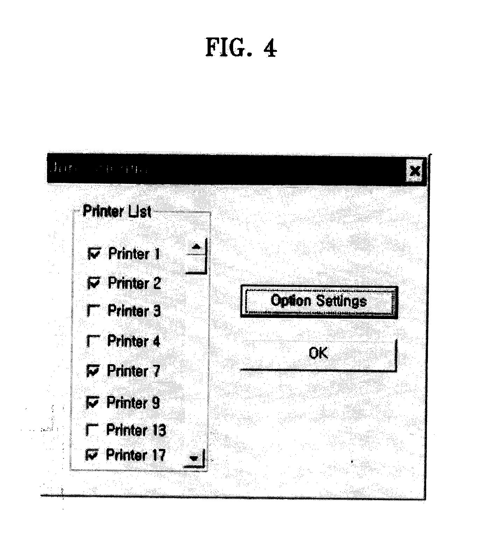

Figure 4 illustrates an exemplary diagram of the list of the image forming apparatuses displayed by a user interface associated with the host. Referring to Figure 4, the host displays the list of the image forming apparatuses that have sent the response signals in order for users to check the list. Users can select one or more image forming apparatuses from among the displayed list to form multiple images.

Referring again to Figure 3, after the host displays the list of the image forming apparatuses that have sent the response signals in Operation 50, the host displays the job retention information to be performed by the image forming apparatuses selected by the user from the displayed list (Operation 52).

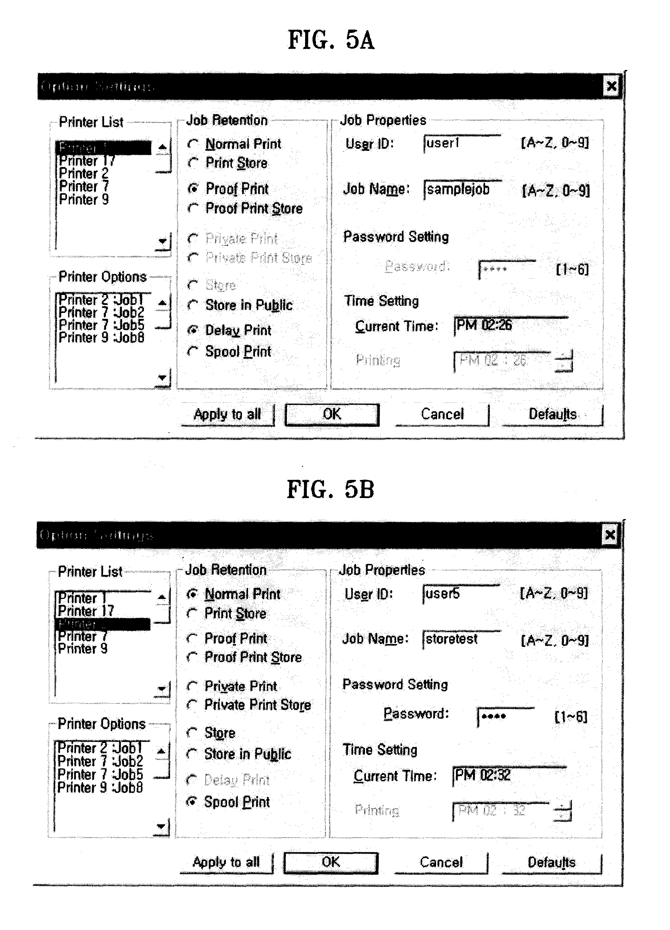

Figure 5A illustrates an exemplary diagram of a job retention information display to be performed by one of the image forming apparatuses displayed by the user interface in Figure 4, and Figure 5B illustrates an exemplary diagram of a job retention information display to be performed by another image forming apparatus displayed by the user interface in Figure 4. If users select the image forming apparatuses (printer 1, printer 2, printer 7, printer 9, printer 17) to form multiple images as described with reference to Figure 4, the job retention information of printers 1 and 2 is displayed as illustrated in Figures 5A and 5B (although the job retention information of printers 7, 9, and 17 are not shown, the job retention information for these image forming apparatuses can also be displayed). The job retention functions (e.g. normal prints, private prints, proof prints, storage, delay prints, and spool prints) that can be performed by the image forming apparatuses (printers) are displayed in active modes. Therefore, users can recognize the active functions as the job retention functions that can be performed by the printers. Users can then select job retention functions to be performed from among the active functions for each selected image forming apparatus.

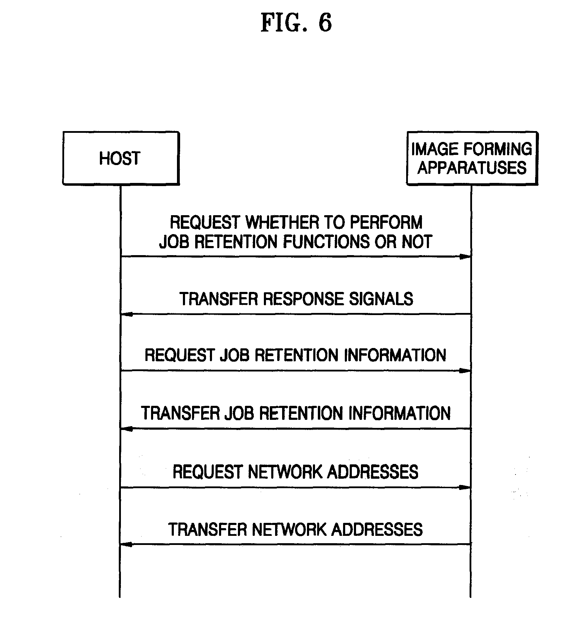

Figure 6 is a flowchart illustrating an exemplary method of collecting and displaying job retention information between the host and the plurality of image forming apparatuses according to the operation of collecting and displaying job retention information (Operation 10). Referring to Figure 6, the host requests each of the image forming apparatuses to decide whether to perform the job retention functions. The image forming apparatuses that are capable of performing the requested job retention functions send response signals to the host. The host requests the image forming apparatuses that have sent the response signals to send job retention information of each of the image forming apparatuses according to the received response signals. The image forming apparatuses that have sent response signals send the job retention information to the host. The host requests the image forming apparatuses that have sent the job retention information to send their respective network addresses. The image forming apparatuses that are requested to send their network addresses send their network addresses to the host.

After Operation 10 is performed, the host stores the job retention functions selected by users using the displayed job retention information of the selected image forming apparatuses (Operation 12). For example, referring back to Figure 5A, proof prints and delay prints are job retention functions selected by users in printer 1, and referring back to Figure 5B, normal prints and spool prints are job retention functions selected by users in printer 2.

The job retention functions of the image forming apparatuses selected by users are stored in the host itself or in an external storage unit. The stored job retention functions may be stored as information in binary digital form.

After the host stores the job retention functions selected by the user in Operation 12, the host generates print job data according to the stored job retention functions and sends the generated print job data to the selected image forming apparatuses (Operation 14).

The print job data includes the job retention functions stored in the host. When the host generates the print job data to be sent to the selected image forming apparatuses, information on the job retention functions stored in the host is added to the print job data as header information.

The print job data is generated using a print job language (PJL) command.

The generated print job data is sent to the image forming apparatuses selected in Operation 12.

After the host generates print job data according to the stored job retention functions and sends the generated print job data to the selected image forming apparatuses in Operation 14, the selected image forming apparatuses that received the print job data including the job retention functions perform print jobs for the print job data according to the job retention functions (Operation 16).

Each image forming apparatus has a printer driver or an application that performs the multi image forming method using the job retention functions.

The present invention may provide a computer-readable recording medium to store a computer program to execute the method of Operations 10 through 16. The present invention may be realized on a computer-readable recording medium that bears a computer-readable code. Computer-readable recording medium may include every type of recording device that stores computer system-readable data. ROMs, RAMs, CD-ROMs, magnetic tapes, floppy discs, optical data storage, etc. are examples of computer-readable recording media. Computer-readable recording media may also be realized in a form of a carrier wave (e.g. transmission through the internet). The computer-readable recording medium may be dispersed in a network-connected computer system, resulting in the computer-readable recording medium being stored and executed as the computer-readable code by a dispersion method. A functional program, code and code segments used to implement the present invention can be derived by a skilled computer programmer from the description of the invention contained herein.

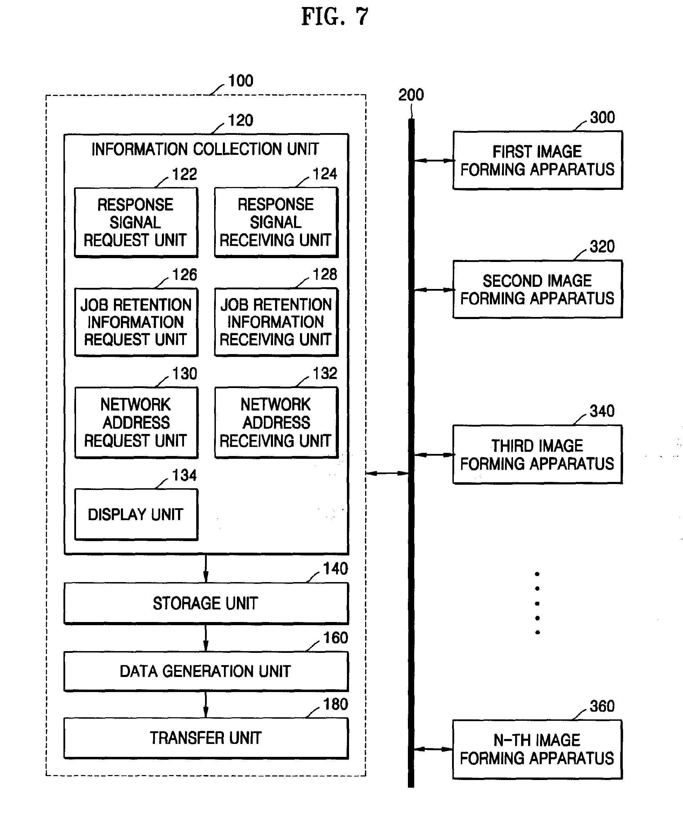

Figure 7 is a block diagram illustrating a multi image forming system using job retention functions according to an embodiment of the present invention. Referring to Figure 7, the multi image forming system includes a host 100 and first to n^{th} image forming apparatuses 300, 320, 340, and 360 connected to the host 100 through a network 200.

The host 100 includes an information collection unit 120, a storage unit 140, a data generation unit 160, and a transfer unit 180.

The information collection unit 120 collects job retention information from the first to n^{th} image forming apparatuses 300, 320, 340, and 360, and displays the collected job retention information.

The information collection unit 120 includes a response signal request unit 122, a response signal receiving unit 124, a job retention information request unit 126, a job retention information receiving unit 128, a network address request unit 130, a network address receiving unit 132, and a display unit 134.

The response signal request unit 122 requests the first to n`'' image forming apparatuses 300, 320, 340, and 360 to decide whether to perform the job retention functions. A request signal to perform the job retention functions is transferred to the first to n^{th} image forming apparatuses 300, 320, 340, and 360, through the network 200.

The response signal receiving unit 124 receives the response signals from each of the image forming apparatuses capable of performing the job retention functions.

The job retention information request unit 126 requests the image forming apparatuses that have sent the response signals to send the job retention information. For example, if the response signal receiving unit 124 receives the response signals from the first and the third image forming apparatuses 300 and 340, the job retention information request unit 126 requests the first and the third image forming apparatuses 300 and 340 to send the job retention information.

The job retention information receiving unit 128 receives the job retention information from the image forming apparatuses that have sent the response signals. For example, if the response signal receiving unit 124 receives the response signals from the first and the third image forming apparatuses 300 and 340, the job retention information receiving unit 128 receives the job retention information from the first and the third image forming apparatuses 300 and 340.

The network address request unit 130 requests the image forming apparatuses that have sent the response signals to send their network addresses. For example, if the response signal receiving unit 124 receives the response signals from the first and the third image forming apparatuses 300 and 340, the network address request unit 130 requests the first and the third image forming apparatuses 300 and 340 to send their network addresses.

The network address receiving unit 132 receives the network addresses of the image forming apparatuses that have sent the response signals from the image forming apparatuses. For example, if the response signal receiving unit 124 receives the response signals from the first and the third image forming apparatuses 300 and 340, the network address receiving unit 132 receives the network addresses of the first and the third image forming apparatuses 300 and 340 from the first and the third image forming apparatuses 300 and 340.

The network address receiving unit 132 receives the internet protocol addresses of the image forming apparatuses as the network addresses. The network address receiving unit 132 establishes ports of the received network addresses.

The display unit 134 displays the received job retention information of the image forming apparatuses. The display unit 134 displays the job retention information, and activates the user interface (UI) to receive the job retention functions of a user.

The display unit 134 displays a list of the image forming apparatuses that have sent response signals and the job retention information to be performed by the image forming apparatuses selected from the displayed list. An example of the displayed list of the image forming apparatuses that have sent response signals is illustrated in Figure 4. Examples of the displayed list of job retention information of a few of the image forming apparatuses are illustrated in Figures 5A and 5B.

The storage unit 140 stores job retention functions of the selected image forming apparatuses from the displayed job retention information. The stored job retention functions may be stored in binary digital form.

The data generation unit 160 generates print job data according to the job retention functions stored in the storage unit 140. The print job data includes the job retention functions stored in the storage unit 140. When the data generation unit generates the print job data to be transferred to the image forming apparatuses, it adds information on the job retention functions stored in the storage unit 140 to the print job data, as header information. The print job data may be generated using a print job language (PJL) command.

The transfer unit 180 transfers the generated print job data to each of the selected image forming apparatuses via the network 200.

The selected image forming apparatuses perform the print jobs for the received print job data.

A multi image forming apparatus control system includes a network connected to a plurality of image forming apparatuses; and a host connected to the network to control the plurality of image forming apparatuses, the host includes a receiving unit to receive predetermined job retention information of the image forming apparatuses capable of performing job retention functions of one or more of the job retention information; a storage unit to store the received job retention information for each of the image forming apparatuses capable of performing the job retention functions; a display unit to display job retention information for each of the image forming apparatuses capable of performing the job retention functions and to select one or more job retention functions for a print job; a data generation unit to generate print job data according to the job retention functions of the job retention information stored in the storage unit; and a transfer unit to transfer the print job data to each selected image forming apparatus. The stored job retention functions are added to the print job data as header information. The display unit comprises a user interface to select the image forming apparatuses to perform the print jobs and to select the job retention functions for the selected image forming apparatuses.

A host usable with a plurality of image forming apparatuses to determine which of the plurality of image forming apparatuses are capable of performing print job functions, to determine job retention information of the capable image forming apparatuses, to select an image forming apparatus to print a print job based on the capability determination, to select the job retention functions for the selected image forming apparatus, to display the capable image forming apparatuses and the job retention information for the capable image forming apparatuses, and to generate print job data for the print job according the selected job retention functions.

The multi image forming method and system using job retention functions can simultaneously form images by applying job retention functions to each of a plurality of image forming apparatuses connected to a network, thereby reducing repetitive image forming operations and enhancing the convenience of users. When a printing document is transferred to the plurality of image forming apparatuses connected to the network using different job retention functions, the plurality of image forming apparatuses can form images with only one command from users.

It will be appreciated by those skilled in the art that changes may be made to the described embodiments without departing from the invention, the scope of which is defined in the appended claims.

## Claims

1. A method of multi image forming using job retention functions, the method comprising:
collecting and displaying (10) job retention information from a plurality of image forming apparatuses (300,320, 340,360) at a host (100) connected to a network;
storing (12) job retention functions of selected image forming apparatuses using the displayed job retention information;
generating (14) print job data according to the stored job retention functions; and
transferring (14) the generated print job data to the selected image forming apparatuses.

2. The method according to claim 1, wherein the collecting of job retention information comprises listing job retention function information and user registration information for the image forming apparatuses.

3. The method according to claim 1 or 2, wherein the collecting and displaying of job retention information comprises:
requesting (30) the image forming apparatuses to decide whether to perform the job retention functions;
receiving (32) response signals from each of the image forming apparatuses capable of performing the job retention functions;
requesting (34) the image forming apparatuses that have sent the response signals to send job retention information;
receiving (36) the job retention information from the image forming apparatuses that have sent the response signals; and
displaying (42) the received job retention information.

4. The method according to claim 3, wherein the displaying of the received job retention information comprises:
displaying (50) a list of the image forming apparatuses that have sent the response signals; and
displaying (52) job retention information to be performed by the selected image forming apparatuses from the displayed list.

5. The method according to claim 3 or 4, wherein the collecting and displaying of job retention information further comprises:
requesting (38) the image forming apparatuses that have sent the response signals to send their network address; and
receiving (40) the network addresses of the image forming apparatuses that have sent the response signals.

6. The method according to claim 5, wherein the receiving the network addresses, the network addresses are internet protocol addresses of the image forming apparatuses.

7. The method according to any preceding claim, including storing the job retention functions in binary digital form.

8. The method according to claim 1, wherein the generating of print job data, each of the print job data are the stored job retention functions.

9. The method according to any preceding claim, further comprising:
performing print jobs for each of the transferred print job data by the selected image forming apparatuses.

10. A printer driver or an application to perform a method of multi image forming using job retention functions as claimed in any preceding claim.

11. A multi image forming system configured to perform a method as claimed in any one of claims 1 to 9.

12. A multi image forming system including a host (100) and a plurality of image forming apparatuses (300,320, 340,360) connected to the host through a network, wherein the host comprises:
an information collection unit (120) which collects and displays job retention information from the image forming apparatuses;
a storage unit (140) which stores job retention functions of selected image forming apparatuses using the displayed job retention information;
a data generation unit (160) which generates print job data according to the stored job retention functions; and
a transfer unit (180) which transfers the generated print job data to the selected image forming apparatuses.

13. The multi image forming system according to claim 12, wherein the job retention information includes list information, job retention function information, and user registration information of the image forming apparatuses.

14. The multi image forming system according to claim 12, wherein the information collection unit comprises:
a response signal request unit (122) which requests the image forming apparatuses to decide whether to perform the job retention functions or not;
a response signal receiving unit (124) which receives response signals from each of the image forming apparatuses capable of performing the job retention functions;
a job retention information request unit (126) which requests the image forming apparatuses that have sent the response signals to send the job retention information;
a job retention information receiving unit (128) which receives the job retention information from the image forming apparatuses that have sent the response signals; and
a display unit (134) which displays the received job retention information.

15. The multi image forming system according to claim 14, wherein the display unit (134) displays a list of the image forming apparatuses that have sent the response signals and job retention information to be performed by the selected image forming apparatuses from the displayed list.

16. The multi image forming system according to claim 14 or 15, wherein the information collection unit further comprises:
a network address request unit (130) which requests the image forming apparatuses that have sent the response signals to send their network address; and
a network address receiving unit (132) which receives the network addresses of the image forming apparatuses that have sent the response signals.

17. The multi image forming system according to claim 16, wherein the network address receiving unit (132) receives internet protocol addresses of the image forming apparatuses as the network addresses.

18. The multi image system according to claim 16, wherein the host establishes a port corresponding to the network addresses of the responding image forming apparatuses.

19. The multi image system according to any one of claims 14 to 18 wherein the display unit (134) activates a user interface to allow a user to select the image forming apparatus to perform the job retention functions from the list of responding image forming apparatuses.

20. A method of controlling a plurality of image forming apparatuses, comprising:
requesting each of the plurality of image forming apparatuses to provide a response signal if predetermined job retention functions can be performed;
receiving the response signal from each image forming apparatus capable of performing the predetermined job retention functions;
requesting each image forming apparatuses providing the response signal to provide job retention information corresponding to the job retention functions;
receiving the job retention information from the image forming apparatuses providing the response signal; and
providing print job data to the image forming apparatuses to perform print jobs corresponding to the provided job retention information.

21. The method of claim 20, further comprising:
displaying the job retention information for at least one of the responding image forming apparatuses;
selecting at least one of the responding image forming apparatuses; and
selecting job retention functions for the responding image forming apparatus.
